# EUROPEAN PATENT APPLICATION

(11) **EP 4 530 882 A1**
(43) Date of publication of application: **02.04.2025**
(21) Application number: 23200747.6
(22) Date of filing: 29.09.2023
(51) Int. Cl.: G06F 16/332, G06F 16/33, G06F 16/36

(54) **GRAPH BASED MEMORY EXTENSION FOR LARGE LANGUAGE MODELS**

(71) Applicant: Honda Motor Co., Ltd., Minato-ku, Tokyo 107-8556 (JP)
(72) Inventor: Eggert, Julian, 63073 Offenbach/Main (DE); Ocker, Felix, 63073 Offenbach/Main (DE)
(74) Representative: Beder, Jens

(57) **Abstract**

The disclosure concerns assistance systems and assistance methods with memory engines that store and retrieve information described and accessed as natural language text. The method generates a response to a query from a user or agent using a vector embedding memory configured to store vectors and generated chunks of natural language text, and a graph-based memory configured to store information in the form of nodes interconnected by links. The method retrieves matching vectors from the vector embedding memory based on a semantic proximity of the stored vectors in the vector embedding memory with vectors generated based on the chunks of natural language text of the obtained query. The method further determines and activates nodes stored in the graph-based memory based on a correspondence with the matching vectors and connected nodes based on links between the activated nodes. The method generates a response to the query based on chunks of text determined based on the semantic proximity of the matching vectors from the vector embedding memory with the vectors generated based on the chunks of natural language text of the query, and based on determined chunks of text that correspond to the activated nodes as additional background information.

## Description

The disclosure is in the field of assistance systems and assistance methods with memory engines that store and retrieve information, which is described and accessed in natural language. In particular, techniques for providing capabilities for generating responses to queries in a dynamic conversation are disclosed.

General-purpose memory engines are used in systems, e.g., assistance systems, which store, retrieve, and use the retrieved information that can be described and accessed in natural language. Current implementations of such systems often use Deep Neural Networks (DNNs) and in particular Large Language Models (LLMs), i.e., DNNs trained on large corpora of Natural Language (NL) texts. LLMs comprise a large amount of knowledge about general facts and common-sense statements made available from their original training using natural language text sources. The strength of LLMs lies in the natural language user interface, their ability to resolve language-based uncertainties and to incorporate human common sense to fill in gaps that insufficiently constrained queries from a user may involve.

However, there exists a number of problems of with current LLMs. Current LLMs exhibit deficiencies in terms of correctness, reliability, transparency, privacy, flexibility of the information used in and output by the LLM in response to queries provided by a user. LLMs exhibit weaknesses in particular with respect to managing additional, e.g., personal or proprietary, data. Since processing of natural language-based text by LLMs uses a kind of statistically guessed likelihood completion, LLMs regularly fail in addressing critical applications.

In use cases, which include dynamically generating the additional data, e.g., by measurements in the real world, e.g., when growing an agent's memory, currently special extensions of LLMs are used.

An available extension uses the LLM as an interface for connecting the LLM with back-end databases, which include the additional data, e.g. sensitive information in a traditional memory structure. Using conventional back-end databases in combination with LLMs combines the strengths of LLMs, which include natural language user interface, resolution of language-based uncertainties, and incorporation of human common sense to fill in the gaps inherent in queries with the strengths of more formal, schema-based databases. Back-end databases have the advantages of high reliability, traceability and proprietary access to sensitive information. The approach of using the LLM also as an interface to the back-end database, e.g., for generating queries in the language specific to the back-end database that include the additional data, may result in a bottleneck either due to limited pre-constructed queries or due to limitations in query generation.

In an alternative approach of extending the current LLMs in order to address at least some of their deficiencies, a mixed structure that bases on less formal databases uses a separate, natural-language oriented memory storage system that includes language embedding of text chunks. This approach uses language embedding in order to find a preselection of relevant text chunks (snippets) based on a determined similarity of a query with the chunks of text in the embedding space. The preselection provides identifiable chunks of text that contain text that is semantically similar and hence assumed relevant for answering the query. Together with the initial query, the (pre-) selected chunks of text are passed to the LLM for generating an answer to the query. The known mixed-structure approach suffers from basing the preselection of relevant text chunks exclusively on a similarity of the embedding. Other memory items, which may be relevant for the query but do not contain semantically similar terms, e.g., because they include complementary information, will not be considered for generating the response.

Improving continuously and incrementally, a growing proprietary memory without the need of costly retraining or fine-tuning general LLMs is desirable.

Taking the aforementioned considerations into account, the task of improving natural-language based information retrieval and reasoning from memory that includes proprietary relational information requires attending.

The computer-implemented method and the corresponding system provide an advantageous solution for this and similar tasks. The dependent claims define further advantageous embodiments.

The computer-implemented method generates a response by an agent to a query from a user or an agent in a system. The system comprises a vector embedding memory configured to store vectors (embedding vectors) and chunks of natural language text, a graph-based memory configured to store information in the form of nodes interconnected by links; and a processor. The method includes steps of retrieving matching vectors from the vector embedding memory based on a semantic proximity of the stored vectors in the vector embedding memory with vectors generated based on the chunks of natural language text of the obtained query, and determining and activating nodes stored in the graph-based memory based on a correspondence with the matching vectors and connected nodes based on the links between the activated nodes. The method further includes a step of generating a response to the query based on chunks of text determined based on the semantic proximity of the matching vectors from the vector embedding memory with the vectors generated based on the chunks of natural language text of the query. The step of generating the response generates the response to the query further based on determined chunks of text that correspond to the activated nodes from of the graph-based memory.

The computer-implemented method according to the first aspect has a number of advantages. In particular, the method provides a capability to make additional information available to question-answering systems, giving them full access to proprietary relational information without having to retrain extensively the question-answering system.

Embedding systems known in the art consider each memory item as independent from each other memory item, and therefore constitute a conventional index memory. The computer-implemented method overcomes this by providing a memory that is related to real-world memory items using a graph structure that provides a web of interconnected concepts. In an example inspired by human memory, a specific event like a concert may be connected to a date via the date of the concert, to a location via a location of the concert, to friends that joined a person for attending the concert, a mood, an experience, a music preferences, terrible weather. All these elements and similar other elements, are associated with each other in the memory, although each element is representing a semantically different and at first glance un-related memory item. Similarly, a note in a personal knowledge graph may be linked to various relevant notes, which provide relevant background information to the note. In consequence, the computer-implemented method provides the specific advantage with regard to existing index memories that the quality of retrieved memory items in form of chunks of text, which subsequently serve to generate a response to the query is increased by taking associative connections between memory items and chunks of text into account. Instead of an index memory as in the known approaches, the computer-implemented method uses an expandable knowledge graph for the sensitive memory and follows relevant relationships in the graph to retrieve further relevant pieces of information in order to generate a response to the query.

The state-of-the-art way of extending of LLMs by additional training or fine-tuning essentially incorporates implicit information about a network of knowledge that is static (fixed), and that is predetermined exclusively by the text and language statistics used during training of the LLM. It is currently enormously costly to retrain or fine-tune LLMs with proprietary information for custom purposes, so that the interface-based coupling with external memories is currently the viable way.

The computer-implemented method according to the first aspect provides a solution, which overcomes the limitation of the known approaches. Proprietary external information does not merely consist of isolated snippets of information and chunks of text. Relations connecting the snippets of information capture a high proportion of the proprietary external information. Returning to the example of a personal memory of a human about a concert visited with a friend, the entire description of the event, the persons attending, their relationship, etc. may be contained in a single text chunk. Converting this chunk into an embedding vector, this information is likely to be found for a query like "With whom did X attend event Y?". In real-world applications, the relevant information can be expected to be distributed across chunks of text, e.g., including (i) the friend and the relationship with friend, (ii) the concert, interpreter, location, data, etc., (iii) the plan to go to the concert on that specific date, (iv) the plan to spend time together with the friend on that specific date, to name just some examples. Connecting all these snippets of information using the graph-based memory in addition to the vector embedding memory, enables to infer that in case of planning to attend the concert on that date, and to spend time with somebody on that date and the information that this somebody is your friend, then it must be that friend you are going to the concert with. The web of links and nodes in the graph-based memory covering relations between the individual snippets of information allows to infer this conclusion, benefit from the additional information included in the graph-based representation stored in and retrieved from the graph-based memory, due to not being included in a single snippet of information or chunk of text.

Current, index-based proprietary memories might suffice in case the level of granularity of the chunks of text matches the level of granularity of the query. This effectively means that most of the information required to answer the query is contained in single chunks of text. If the query requires assembling information distributed across different chunks of text, not all of which have embedding vectors to the query's embedding, the graph-based representation of the computer-implemented method is advantageous for basing the information-retrieval process thereon in order to provide a more satisfying response.

The computer-implemented method according to an embodiment comprises augmenting the generated response with references to the chunks of text that are used as a basis for generating the response for enabling full traceability.

The embodiments defined by the dependent claims include a computer-implemented method for generating a response to a query from a user or agent according to the first aspect, the method further comprising steps of obtaining and processing, by a natural language processing module, instructions in natural language from the user to generate chunks of text; generating, by a text embedding module vectors based on the chunks of text; storing, by the vector embedding memory the vectors generated by the text embedding module associated with the generated chunks of text; searching, by the processor, the vector embedding memory to determine matching vectors based on a similarity with the vector of the obtained query from the user or agent; retrieving, by a vector retrieval module, the stored vectors from the vector embedding memory based on a semantic proximity of the stored vectors in the vector embedding memory with vectors generated by the text embedding module based on the chunks of natural language text of the query obtained and processed by the natural language processing module for generating a first ranked list of the determined matching vectors, and to determine nodes stored in the graph-based memory based on a correspondence with the determined vectors of the first ranked list of matching vectors to generate a second ranked list of corresponding nodes, wherein the graph-based memory stores information in the form of nodes interconnected by links, wherein each node includes a specific chunk of text representing a concept and each link is arranged between a source node and a target node of the nodes and each link represents a relationship between the concepts of the source node and the target node; activating by the processor, the corresponding nodes stored in the graph-based memory and activating connected nodes based on links between the activated nodes and the other nodes in the graph-based memory by applying a graph traversal strategy, e.g., a graph traversal algorithm such as a random walk or a personalized page-rank; generating, by the processor, a third ranked list including the activated nodes stored in the graph-based memory, selecting the activated nodes of the third ranked list for further processing, and determining the chunks of text that correspond to the activated nodes of the third ranked list; and receiving, by the natural language processing module the determined chunks of text that correspond to the activated nodes of the third ranked list, and generating a response to the query based on the chunks of text determined based on the semantic proximity of the stored vectors in the vector embedding memory with the vectors generated by the text embedding module based on the chunks of natural language text of the query, and the determined chunks of text that correspond to the activated nodes of the third ranked list for further processing.

The agent may be an agent that comprises the system. Alternatively, the agent is another agent that is different from the agent that comprises the system.

Hence, the computer-implemented method provides a response to the query by the user or agent that bases on the determined chunks of text that correspond to the activated nodes of the third ranked list for further processing as additional background information.

The computer-implemented method for generating a response to a query from a user or agent according to an embodiment includes retrieving, by the vector retrieval module the vectors from the vector embedding memory based on the semantic proximity of the stored vectors in the vector embedding memory in combination with a keyword-based search.

According to an embodiment of the computer-implemented method for generating a response to a query from a user or agent, the method includes the vector embedding memory and the graph-based memory being populated in parallel a priori in a training phase of the system.

Alternatively, the computer-implemented method for generating a response to a query from a user or agent, the method includes populating the vector embedding memory and the graph-based memory dynamically during an operation phase of the system.

In the computer-implemented method according to an embodiment each node includes a chunk of natural language text representing an abstracted concept.

The computer-implemented method according to an embodiment includes maintaining, by the processor, continuously a correspondence between a vector stored in vector embedding memory and the corresponding node stored in the graph-based memory.

According to an embodiment of the computer-implemented method, the nodes stored in the graph-based memory correspond to concepts that are a superset of the concepts corresponding to the vectors stored in the vector embedding memory, and the graph-based memory stores additional information about a set of concepts (common set of concepts) in form of relations between the concepts of the set of concepts and additional concepts without corresponding vectors in the vector embedding memory.

In mathematics, a set A is a subset of a set *B* if all elements of A are also elements of *B,* and *B* is then a superset of A. It is possible for A and *B* to be equal; if they are unequal, then A is a proper subset of *B*. The relationship of one set being a subset of another is called inclusion or sometimes containment. A is a subset of *B* may also be expressed as *B* includes A, or A is included in *B.* A k-subset is a subset with *k* elements.

The computer-implemented method according to an embodiment includes storing, in the graph-based memory, additional information about additional concepts exceeding the concepts corresponding to the vectors stored in the vector embedding memory.

The computer-implemented method according to an embodiment includes analyzing, by the natural language processing module, questions, queries or instructions obtained from the user or the agent, and, based on the analysis, to determine whether there is an intent of the user to access stored memory content of the knowledge base, or to store new memory content in the knowledge base, i.e., isolate the user's new memory content, and the text embedding module is further configured to convert the generated chunk of text that describes the new memory content into a vector that describes the new memory content.

Thus, the embodiment is able to determine whether the user or agent might want to retrieve information from the memory or to store additional information into the memory. The system bases the determination of the intent on an analysis of the query or instruction, e.g. by the natural language processing module. The method may be used for both adding information to the knowledge base and retrieving information from the knowledge base.

The computer-implemented method according an embodiment includes analyzing, by the natural language processing module questions, queries or instructions obtained from the user or agent. In the step of activating nodes by the processor, the corresponding nodes are activated based on the analysis stored in the graph-based memory and connected nodes are activated corresponding nodes based on the links between the activated corresponding nodes and the other nodes in the graph-based memory. In particular activating the corresponding nodes based on the analysis stored in the graph-based memory and activating connected nodes based on the links between the activated nodes and the other nodes in the graph-based memory includes restricting activating the connected nodes to a selected subset of link types and node types based on the analysis.

In this embodiment, in case the analysis of the query provides the result that a specific type of question e.g., about location, time, person, etc. is obtained, the system determines and activates nodes in the graph-based memory by concentrating respectively on, e.g., spatial, temporal, or personal types of links and nodes. Hence, the retrieval of information from the graph-based memory is performed in a more targeted manner accelerating the retrieval or reducing the required processing resources and improving the result.

Analyzing, by the natural language processing module, questions, queries or instructions obtained from the user or agent may include searching for keywords including terms such as "where", "when", "who", "how", for determining whether a specific type of question about location, time, or person is indicated. According to an embodiment of the computer-implemented method, the method comprises generating the first ranked list of matching vectors for responding to the obtained query from the user or agent from the vectors stored in the vector embedding memory including, for each matching vector, a measure of a degree of match or a measure for suitability or a similarity assessment.

The computer-implemented method according to one embodiment uses the vector embedding memory storing content of at least one further modality. The method maycomprise generating the response to the query further based on the stored content of the at least one further modality based on the retrieved matching vectors from the vector embedding memory.

Thus, multi-modal search results may be provided by optionally storing content of further modalities in the memory and retrieving results of various modalities from the vector embedding memory by creating embedding vectors in a same embedding space.

Hence, using an appropriate embedding model, the method also enables to embed input of other modalities than text content, e.g., image content or sound recordings. This allows to find and retrieve not only chunks of text but also chunks of information of different modalities.

The computer-implemented method according to an embodiment includes building dynamically, by a perception module, a knowledge database stored in the vector embedding memory and the graph-based memory, wherein the knowledge database comprises a plurality of chunks of text stored in the vector embedding memory and a plurality of nodes and links stored in the graph-based memory.

The computer-implemented method according to an embodiment comprises performing, by the processor a synchronization process including at least one of comparing representations stored in the vector embedding memory with corresponding representations stored in the graph-based memory and deriving representations stored in the vector embedding memory and corresponding representations stored in the graph-based memory from one predetermined data source.

The computer-implemented method according to an embodiment comprises determining, by the processor, a type of the query based on an analysis of the chunk of text, and activating, by the processor, the nodes stored in the graph-based memory further based on the determined type of query. In particular, the method may comprise activating, by the processor, selected link types or node categories stored in the graph-based memory further based on the determined type of query.

The computer-implemented method according to an embodiment comprises determining, by the processor, restrictions for refining the query based on an analysis of the chunk of text, and activating, by the processor, the nodes stored in the graph-based memory further based on the determined type of query. In particular, the method may comprise activating, by the processor, nodes connected via selected link types or node categories stored in the graph-based memory further based on the refined query.

Thus, by performing a preprocessing including an intent analysis of the obtained query and then appropriate tuning of the graph-based augmentation using the knowledge representation stored in the graph-based memory, the search for suitable information snippets based on the graph may be more targeted. Therefore, the processing is performed more efficiently while simultaneously improving the quality of the retrieved information from the graph. If, for example, the query asks a question including a "where"-clause, the determined type of the query may be a location query. The search in the graph-based memory may then restricted to spatial relations in the links.

According to an embodiment, the computer-implemented method comprises adjusting, by the processor, dynamically a number of retrieved chunks of text when activating the corresponding nodes stored in the graph-based memory. In particular, the method may dynamically adjust the number of retrieved chunks of text from the representation stored in the graph-based memory in order to avoid reaching a token limit. The method may include determining, by the processor whether information retrieved from the graph-based memory and the vector embedding memory is sufficient for responding to the query. The method may then dynamically adjust the number of retrieved chunks of text from the graph-based memory in case of determining that the information retrieved from the graph-based memory and the vector embedding memory is insufficient for responding to the query.

Thus, the posterior LLM inference is optimized, resulting in reduced processing complexity and tailoring the response to the requirements for the response. For example, the method may avoid reaching the token limit, or by separately analyzing if the retrieved information is sufficient to answer the query or if retrieving more information is recommendable to sufficiently answering the query.

The computer-implemented method according to an embodiment comprises determining, by the processor, a size of the retrieved chunks of text from the representation stored in the graph-based memory and the vector embedding memory, and in case the determined size exceeds a predetermined threshold, applying a process of summarizing based on a large language model, in particular based on MapReduce algorithm, the retrieved chunks of text.

Thus, the amount of data for collecting and generating the response based thereon is limited, thereby limiting the computational complexity of the succeeding processing steps.

MapReduce refers to a programming model and an associated implementation for processing and generating big data sets with an independent and possibly parallel processing algorithm on a cluster of processing devices. MapReduce includes mapping a same function to several inputs allowing for independent and possibly parallel processing followed by a summarization step. The summarization step may be performed on several graphical processing units (GPU) in parallel. Alternatively, variations of MapReduce may be used to retrieve and add further information incrementally from the knowledge base until determining that the generated response to the query is accurate.

According to an embodiment, the computer-implemented method comprises determining, by the processor, a measure representing a mapping of the chunks of text to the representation stored in the graph-based memory, and to adapt the process of generating the chunks of text and determining the mapping measure until the determined mapping measure meets a predetermined termination criterion.

The system according to the second aspect provides corresponding advantages as discussed with regard to the computer-implemented method according to the first aspect.

In the second aspect, the system of an agent for generating a response to a query from a user or agent comprises a vector embedding memory configured to store vectors and generated chunks of natural language text, a graph-based memory configured to store information in the form of nodes interconnected by links, and a processor. The processor is configured to retrieve matching vectors from the vector embedding memory based on a semantic proximity of the stored vectors in the vector embedding memory with vectors generated based on the chunks of natural language text of the obtained query, to determine and activate nodes stored in the graph-based memory based on a correspondence with the matching vectors and connected nodes based on the links between the activated nodes, and to generate a response to the query based on chunks of text determined based on the semantic proximity of the matching vectors from the vector embedding memory with the vectors generated based on the chunks of natural language text of the query. The processor further generates the response based on determined chunks of text that correspond to the activated nodes from of the graph-based memory.

A system including an agent and the system for generating a response to a query from the agent according to the second aspect, wherein the agent is an autonomous agent is also advantageous.

In particular, the autonomous agent is configured to generate and output a large language model based query and to perform behavior planning for the autonomous agent based on the response received from the system for generating a response to the query of the autonomous agent.

Thus, the response to the query received from the system may include information, e.g., about preferences of relevant stakeholders and cause effect chains for possible actions planned for execution by the autonomous device.

In this embodiment, the autonomous agent is configured to generate and internally process a large language model based query and to perform its behavior planning based on the response received from the system, which serves as the autonomous agent's memory, for generating a response to the query of the autonomous agent. The memory is able to store information as it is relevant for decision-making and robotic planning, such as action-related memories capturing cause-effect chains, especially but not solely via the graph-based memory, and information about results, capabilities, tools, or agents which may participate in an action, especially but not solely via text based descriptions.

In this case, the agent is not using the proposed system for generating a response for a user or another agent different from the agent, who posed the query. The autonomous agent is querying its own internal memory in a sort of inner monologue because in order to retrieve particular information for reasoning, planning or action execution.

Thus, the system and corresponding method is particularly helpful in applications of planning a behavior of autonomous agents e.g., a robot. The technique may help for retrieving relevant information for a decision-making process of the robot. For instance, a preference of a human user may be stored in a specific text, e.g., "Paul likes to cuddle with cats". In case the robot poses the query to the system, which corresponds to "how can I comfort Paul", the response generated and output to the system may base on the aforementioned stored preference in the text.

Many interconnected memories relate to activity-related memories or action-related memories. These interconnected memories may store information that represents cause-effect chains. Examples for such cause-effect chains may include a reasoning similar to "after something was observed, something else happened, with the consequence of ...". Cause-effect chains stored in interconnected memories may also include direct information about results, capabilities, tools, or agents, which can participate in an action. The computer-implemented method is suitable to store information on such cause-effect chains and to retrieve such information, which is essential for performing predictive reasoning including action planning for autonomous agents.

The following description of embodiments refers to the figures, in which
Fig. 1 shows a schematic flow diagram of a computer-implemented method according to an embodiment;
Fig. 2 presents an overview of the architecture of a graph-vector-text memory of the proposed system and its population and use in an embodiment;
Fig. 3 presents an overview of the architecture of a retrieval process leveraging relational information in an embodiment; and
Fig. 4 presents an overview on a high level of abstraction of an architecture of the proposed system.

In the figures, corresponding elements have the same reference signs. The discussion of the figures avoids discussion of same reference signs in different figures wherever considered possible without adversely affecting comprehensibility and avoiding unnecessary repetitions for sake of conciseness.

The disclosure refers to vectors, which in particular are dense vectors. A dense vector is a highly dimensional vector, e.g., including a three-digit number of dimensions. Each dimension contains relevant information, which may be determined by a neural network. Due to the large number of dimensions, compressing these vectors is more complex, so they typically require more memory than a sparse vector.

The vectors define an embedding vector space adapted to capture semantic proximity of the vectors.

The present application uses the word token representing a word in natural language utterance that is mapped to a vector of embedding values for nodes in a knowledge graph. Tokens may be parts of words, words or sequences of words. Typically a token corresponds to four characters.

The present application uses the known word token representation for the embedding vectors of natural language text. Tokens may be parts of words, words, or sequences of words. In particular, tokens may refer to parts of words. Before processing the prompts, an input is broken down into tokens. These tokens are not cut up exactly where the words start or end. Tokens can include trailing spaces and even sub-words. One token often refers to four characters in English language, which results in one token corresponding to roughly ¾ word, or 100 tokens to about 75 words.

The term token limit refers to the maximum number of tokens a LLM can process. The token limit combines the input tokens and the output tokens.

In knowledge representation and reasoning, a knowledge graph is a knowledge base that uses a graph-structured data model or topology to integrate data. Generally, knowledge graphs may store interlinked descriptions of entities - objects, events, situations or abstract concepts - while also encoding the semantics underlying the used terminology. In particular, a knowledge graph may represent a digital structure that represents knowledge as concepts and the relationships between them (facts). A knowledge graph can include an explicit specification of concepts that allows both humans and machines to understand and to argue about its contents.

The computer-implemented method maybe particularly advantageous for agents including virtual agents that are computer-generated agents that have the capability to interact with human users. Task-oriented virtual agents may communicate with human users in natural language and work with or support users in performing various tasks.

Natural language understanding systems interpret the word sequences of utterances of users. Natural language understanding systems are used by task-oriented virtual agents.
The computer-implemented method and system extend the advantages of graph databases, which store information in the form of heterogeneous graphs, in which nodes (concept nodes) represent entities or concepts and edges represent relationships between the entities or concepts. In graph databases, a relation, e.g., a heterogeneous connection between entities is a first-class citizen. With the graph structure and a flexible schema, graph databases allow for a more efficient and expressive way than relational databases to handle higher-order relationships between distant entities, and in particular navigating data structures including multi-hop hierarchies. While traditional databases require expensive join operations to retrieve information, graph databases can directly traverse the graph and navigate through links more efficiently using the adjacency matrix of the graph database.

Increasing amounts of personal information are digitally available. Accessing this source of information became significantly easier with recent improvements in LLMs and augmenting technologies such as retrieval augmented generation (RAG), which enable developing chatbots for personal or private data. However, even if combined with keyword search, approaches that are built around semantic similarity using embeddings are inherently limited by these search techniques, which do not take into account relational information. Contrary thereto, the disclosed computer-implemented method provides such relational information and leverages it for identifying additional relevant context, allowing an in-depth answering of questions that exceeds significantly beyond the content of individual documents or isolated chunks of text and reveals an increased understanding of the subject matter of the query.

Specific examples of knowledge management systems include, but are not limited to, a system for responding to natural language queries using a graph-based knowledge base, e.g., Notion, and a chatbot for retrieving information about research papers, which is also able to leverage information not explicitly contained in the papers themselves. For instance, relational information about the author's affiliations may provide further insights. The following discussion of the figures concentrates on advantageous implementations of methods for responding to queries. Further advantageous application areas are summarized in the closing remarks.

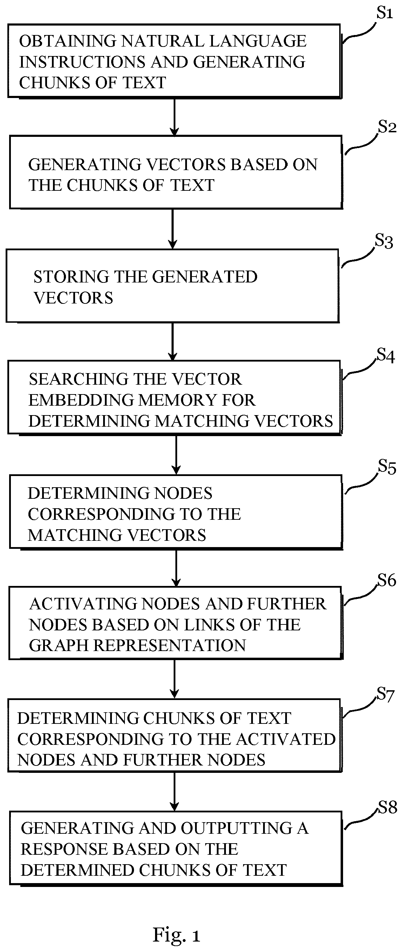

Fig. 1 shows a schematic flow diagram of a computer-implemented method according to an embodiment for generating a response to a query.

The method starts with obtaining and processing, by a natural language processing module NLP, instructions in natural language from the user to generate chunks of text based thereon in step S1. The instructions in natural language may correspond to a query or multiple queries from a user or an agent. The agent may be a virtual agent or an embodied agent.

The natural language processing module NLP may combine a plurality of modules. The natural language processing module NLP is configured to analyze and process natural language text to generate inputs for other modules.

The natural language processing module NLP may be based on LLMs such as ChatGPT, which may be suitable to perform tasks including natural language processing for intent classification. For intent classification, the natural language processing module NLP identifies an intent inherent in natural language (NL) queries. In particular, the natural language processing module NLP isolates primarily questions in queries, which should receive a response. Furthermore, the natural language processing module NLP may identify statements, which should be stored in a memory 23 of the system 20.

Additionally, the natural language processing module NLP may perform information extraction by processing NL statements, e.g., via Named Entity Recognition and Named Entity Linking, in order to store the statements into the memory 23.

The natural language processing module NLP may also perform query preparation (NLPQP). For performing NLPQP, the natural language processing module NLP obtains the NL text as input and then transforms it into a query, e.g., Cypher.

The system 20 may include a chunk-handling module (CH). The chunk-handling module CH splits text inputs into manageable chunks of text (text chunks), each chunk of text of a smaller size that is optimized for the token limits of a text embedding module TE and a response generating module RGM's as well as the respective capability of the text embedding module TE and the response generating module RGM's to capture semantics of text and to generate response texts.

The chunk-handling module CH further performs concatenating the chunks of text generated from the query as received from the user or agent and selected natural language chunks and passes the concatenated chunks of text to the response generation module RGM.

In step S2, the method proceeds with generating, by a text embedding module TE, vectors based on the chunks of text generated based on the obtained instructions.

The text embedding module TE receives natural language text as input and processes the natural language text based on statistical correlations. The statistical correlations may be implicitly included in a neural network (NN) representation. The text embedding module TE generates a vector embedding (VE) or vector, which can be stored in a memory and which can be compared with other vectors for similarity.

In step S3, the method may store in the vector embedding memory VEM the vectors generated by the text embedding module TE associated with the generated chunks of text.

Not explicitly shown in fig. 1, the method may store the generated vectors in the vector embedding memory VEM and further store in the graph-based memory GBB corresponding nodes and links between the corresponding nodes.

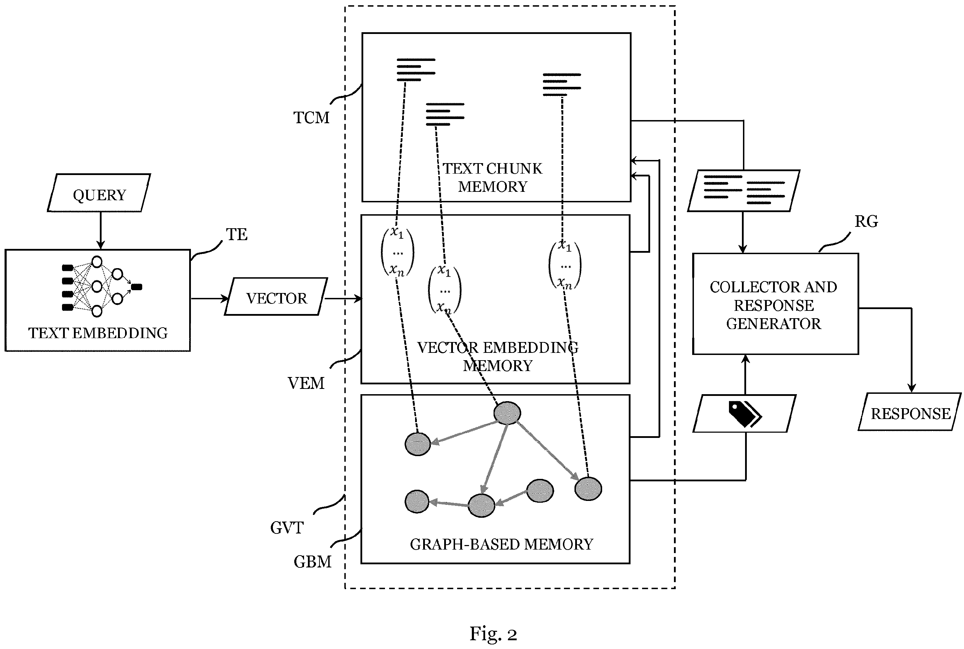

The structure of the vector embedding memory VEM will be discussed in more detail with reference to the graph-vector-text memory GVT of fig. 2.

In step S4, the method includes searching, by the processor 21, the vector embedding memory VEM to determine matching vectors based on a similarity with the vector of the obtained query from the user or agent, retrieving, by a vector retrieval module VR, the stored vectors from the vector embedding memory VEM based on a semantic proximity of the stored vectors in the vector embedding memory VEM with vectors generated by the text embedding module TEM based on the chunks of natural language text of the query obtained and processed by the natural language processing module NLP for generating a first ranked list of the determined matching vectors,

Step S5 following to step S4 includes the processor 21 determining nodes stored in the graph-based memory GBM based on a correspondence with the determined vectors of the first ranked list of matching vectors to generate a second ranked list of corresponding nodes. The graph based memory GBM stores information in the form of nodes interconnected by links, wherein each node includes a specific chunk of text representing a concept and each link is arranged between a source node and a target node of the nodes and each link represents a relationship between the concepts of the source node and the target node.

In step S6, the method proceeds with activating, by the processor 21, the corresponding nodes stored in the graph-based memory GBM and activating further connected nodes based on links between the activated nodes and the other nodes in the graph-based memory GBM by applying a graph traversal algorithm. The graph traversal algorithm may include a random walk or a personalized page-rank.

In step S7, the processor 21 further generates a third ranked list including the activated nodes stored in the graph-based memory GBM, selects the activated nodes of the third ranked list for further processing, and determines the chunks of text that correspond to the activated nodes of the third ranked list.

In step S8, the method proceeds with receiving, by the natural language processing module NLP, the determined chunks of text that correspond to the activated nodes of the third ranked list. The natural language processing module NLP generates a response to the query based on the chunks of text determined based on the semantic proximity of the stored vectors in the vector embedding memory VEM with the vectors generated by the text embedding module TEM based on the chunks of natural language text of the query, and the determined chunks of text that correspond to the activated nodes of the third ranked list for further processing.

In particular, a question-answering module QA implemented using the natural language processing module NLP generates a response to the query based on the given context of chunks of text that correspond to the activated nodes of the third ranked list. The question-answering module QA may be implemented using specifically trained language models or even general purpose LLMs.

As the original entry points of the search and the search propagation process are known, the response can easily be extended with citations for the sources, enabling full traceability.

The generated response is subsequently output to the user, who presented the original query or to the agent providing the query. The response is in natural text, in particular in natural text in audible form or in visible form.

Fig. 2 presents an overview of the architecture of a graph-vector-text memory GVT of the proposed system and its population and use in an embodiment.

At the center of fig. 2, the graph-vector-text memory GVT is depicted.

The graph-vector-text memory GVT includes the text chunk memory TCM, the vector embedding memory VEM, and the graph-based memory GBM.

The GVT may be implemented as part of the memory 23 of the system 20. Alternatively or additionally, at least some portions of the graph-vector-text memory GVT, the text chunk memory TCM, the vector embedding memory VEM, and the graph-based memory GBM may be implemented on one or plural servers accessible via a network 27 for the system 20.

The text chunk memory TCM is a memory for storing and retrieving text chunks.

The graph-based memory GBM is a database, which stores and retrieves concepts from a knowledge graph. The graph-based memory GBM stores, e.g., a graph with possibly labeled nodes and optionally labelled links. The labelled links may, e.g., include properties of relations on which the link bases. The nodes of the graph represent memory items and the links between the nodes of the graph represent associations between the nodes, wherein each link is between a start node and a target node.

In particular, the graph-based memory GBM stores information in the form of nodes interconnected by links, wherein each node includes a specific chunk of text representing a concept and each link is arranged between the source node and the target node of the nodes and each link represents a relationship between the respective concepts of the source node and the target node.

The graph-based memory GBM may be implemented using knowledge graphs (KGs) in graph databases like Neo4j.

The vector embedding memory VEM is a vector storage for storing and retrieving the vectors (embedding vectors). Each vector stored in the vector embedding memory VEM maintains a reference to the original text chunk from which it was generated, as well as a reference to the corresponding node in the graph-based memory GBM.

Thus, vectors stored in the vector embedding memory VEM can refer to, e.g., trigger, nodes that are stored in the graph-based memory GBM.

Implementations for the vector embedding memory VEM may base on currently existing vector stores or vector databases including ChromaDB or Pinecone.

In a proof of concept storing small chunks of text, the graph-vector-text memory GVT including the text chunk memory TCM, the vector embedding memory VEM, and the graph-based memory GBM, the TCM module, and the VEM module are realized via Neo4j. Neo4j includes a graph database that supports storing vector embeddings, and enables searching by embedding similarity using an implementation of the HNSW algorithm as disclosed by Hasbe, S.: Neo4j's Vector Search: Unlocking Deeper Insights for AI-Powered Applications, 2023 (https://neo4j.com/blog/vector-search-deeper-insights).

The query obtained by the system 20 includes natural language text (plain text) representing the input to the system 20.

The text-embedding module TE generates the vector (embedding vector) based on the obtained query.

The generated vector provides the basis for the similarity search in a vector representation including a plurality of vectors stored in the vector embedding memory VEM.

The results of the similarity search in a vector representation include vector(s) that fulfill the similarity criteria of the similarity search. On the one hand, the resulting similar vector(s) directly correspond to (are associated with) text chunks stored in the text chunk memory TCM. On the other hand, the resulting similar vector(S) correspond to (are associated with) nodes of a graph representation stored in the graph-based memory GBM.

The nodes of the graph based representation associated with the resulting similar vectors form the basis of an associative propagation search on the graph representation stored in the graph-based memory GBM.

The associative propagation search on the graph representation may be performed iteratively until a termination criterion is met. The termination criterion may base on determining that sufficient information for responding to the query has been retrieved.

The associative propagation search returns further nodes. The returned further nodes enable the system 20 to retrieve further relevant chunks of text from the text chunk memory TCM, which are stored in the text chunk memory in association with the further nodes.

Subsequently, all retrieved chunks of text are provided to the collector and response generating module RG. The entirety of retrieved chunks of text include chunks of text directly retrieved by the similarity search performed on the embedding memory VEM (hereinafter referred to as (retrieved) chunks of text) and additionally retrieved relevant chunks of text that are determined by graph propagation using the graph-based memory GBM (hereinafter referred to as further (retrieved) chunks of text).

The collector and response-generating module RG collects all evidence, including in particular the retrieved chunks of text and the further retrieved chunks of text that were identified to be relevant via the associative propagation search process. The collector and response-generating module RG (response generating module RG) then generates the response to the obtained query and outputs the generated response to the user or agent posing the query.

The generated response is in natural language text.

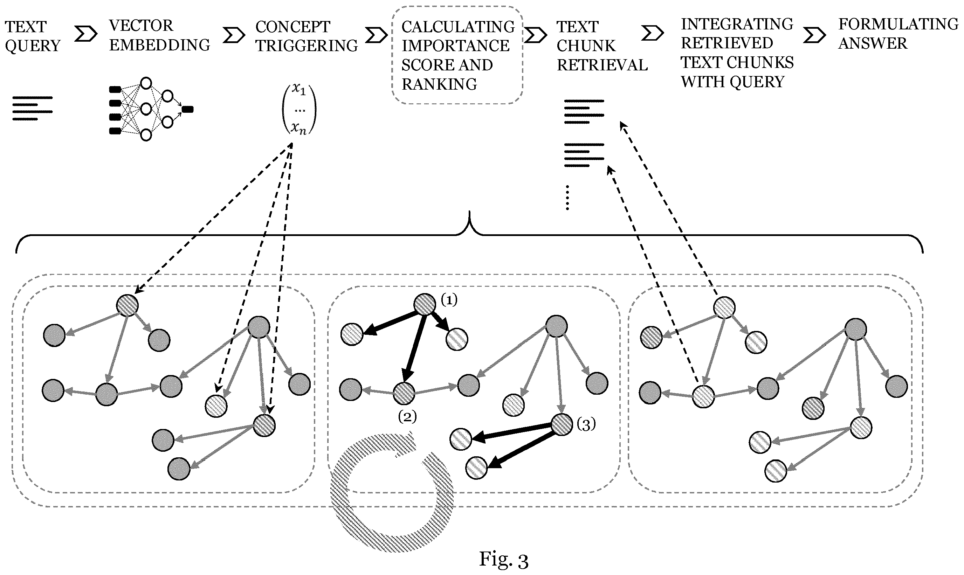

Fig. 3 presents an overview of the architecture of a retrieval process leveraging relational information in an embodiment of the computer-implemented method.

When a query to the system 20 is formulated by a user or an agent and received by the system 20, the received query is processed by the natural language processing modules NLP.

The natural language processing modules NLP pass a resulting text including one or a plurality of chunks of texts on to the text-embedding module TE, which generates an embedding vector (vector) based on the chunk(s) of text. The geometry of the embedding vector space is well suited to capture a semantic proximity between the vectors constituting the vector space. The generated vector is subsequently used to query the vector embedding memory VEM for similarity with vectors stored in the vector embedding memory VEM. The vector embedding memory VEM returns a ranked list of the most similar vectors of the vectors stored in the vector embedding memory VEM. The returned most similar vectors represent the semantically closest vectors or concepts to the vector generated based on the text chunks(s) of the original query. Each vector returned by the vector embedding memory VEM comprises a reference to a corresponding node in the graph-based memory GBM. In particular, each vector returned by the vector embedding memory VEM triggers a specific concept corresponding to a node due to including a reference to a corresponding node in the graph-based memory GBM. Thus, the nodes corresponding to the concepts that are most related to the original query can be retrieved from the graph-based memory GBM based on the result of the similarity search conducted on the vectors stored in the vector embedding memory. Now, starting from these nodes corresponding to the most-related concepts, the link structure stored in the graph-based memory GBM is used to retrieve further associated nodes and links from the graph-based memory GBM.

The most relevant nodes including the nodes selected based directly on the similarity search conducted on the vectors stored in the vector embedding memory VEM and further nodes retrieved via the search along the links in the graph-based memory GBM are then used to retrieve related text chunks as further retrieved chunks of text from the text chunk memory TCM.

The texts of the retrieved chunks of text are then compiled as a natural text background evidence, combined with the original query text, and metadata from the graph-based memory GBM for traceability of the further retrieved chunks of text, and passed to the response-generating module RG for generating the response based thereon. In particular, the texts of the retrieved chunks of text form the basis for formulating an answer to the original query provided to the system 20.

In addition, the system 20 may augment the generated response with references to the chunks of text that are used as a basis for generating the response for enabling full traceability of chunks of text and the further chunks of text used as a basis for generating the response. The references may form augmentation information that may include metadata of the further retrieved chunks of text, e.g., an identifier associated with the respective chunk of text, and a source of the respective chunk of text. The references are advantageous for traceability of the retrieved further chunks of text, and the metadata like the identifier and the source of the chunk of text may be output to the response-generating module RG for augmenting the generated response. The lower portion of fig. 3 provides more detail to the search process for relevant concepts in the graph-based memory GBM.

The search process starts with determining nodes stored in the graph-based memory GBM based on a correspondence with the determined vectors of the first ranked list of matching vectors to generate a second ranked list of corresponding nodes.

Thereafter, the search process proceeds with activating the corresponding nodes stored in the graph-based memory GBM and activating connected nodes based on links between the activated nodes and the other nodes in the graph-based memory GBM by applying e.g. a random walk algorithm or a personalized page-rank algorithm, however other types of graph-algorithms are also applicable like graph-traversal or activation-spread algorithms.

Subsequently, the search process proceeds with generating a third ranked list including the activated nodes stored in the graph-based memory GB), selecting the activated nodes of the third ranked list for further processing, and then determining the chunks of text that correspond to the activated nodes of the third ranked list.

Ranking the determined vectors in the first ranked list activated nodes in the second ranked list and the third ranked list may be performed by calculating respective importance scores and sorting the first, second, and third ranked list based on the calculated importance score.

The importance score(s) may include numerical values, which describe a relevance of a vector or node for responding to the query at hand.

The third ranked list represents then the input for determining the relevant chunks of text that correspond to the activated nodes of the third ranked list for further processing, in particular collecting the information for preparing a response to the query.

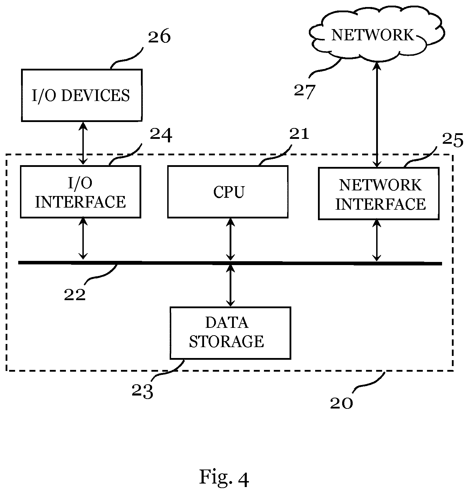

Fig. 4 presents an overview on a high level of abstraction of an architecture of the proposed system 20.

The system 20 of fig. 4 includes a processor 21, a data storage 23 (memory 23), an input/output interface 24, and a network interface 25, which are linked by a data bus 22.

The input/output interface 24 may in particular provide a capability to obtain queries from other agents or a human user via speech or text. The input/output interface 24 may therefore represent an interface for connecting input/output devices 26 including, but not limited to keyboards, mouse, pointing devices, displays, microphones, loudspeakers in any combination.

The input/output interface 24 may at least in part be implemented in software modules running on the processor 21.

The processor 21 may be any type of controller or processor, and may even be embodied as one or more processors 21 adapted to perform the functionality discussed herein. As the term processor is used herein, the processor 21 may include using a single integrated circuit (IC), or may include use of a plurality of integrated circuits or other components connected, arranged or grouped together, such as controllers, microprocessors, digital signal processors (DSP), parallel processors, multiple core processors, custom ICs, application specific integrated circuits (ASIC), field programmable gate arrays (FPGAs), graphics processing units (GPUs), and further include adaptive computing ICs and associated memory, e.g., RAM, DRAM and ROM, and other ICs and components. Hence, the term processor 21 should be understood to equivalently mean and include a single IC, or arrangement of custom ICs, ASICs, processors, microprocessors, controllers, FPGAs, adaptive computing ICs, or some other grouping of integrated circuits which perform the functions discussed for the computer-implemented method, with associated memory, such as microprocessor memory or additional RAM, DRAM, SDRAM, SRAM, MRAM, ROM, FLASH, EPROM or E2 PROM. The processor 25 with its associated memory, may be adapted or configured via programming, FPGA interconnection, or hard-wiring to perform the methodology of the computer-implemented method. For example, the method may be programmed and stored, in the processor 21 with its associated memory or memory 23, and other equivalent components, as a set of program instructions or other code for subsequent execution when the processor 21 is operative, e.g., powered on and functioning.

The memory 23 , which may include a data repository or database, may be embodied in any number of forms, including within any computer or other machine-readable data storage medium, memory device or other storage or communication device for storage or communication of information, including, but not limited to, a memory integrated circuit (IC), or memory portion of an integrated circuit (such as the resident memory within a or processor 21, whether volatile or non-volatile, whether removable or non-removable, including without limitation RAM, FLASH, DRAM, SDRAM, SRAM, MRAM, FeRAM, ROM, EPROM or E2 PROM, or any other form of memory device, such as a magnetic hard drive, an optical drive, a magnetic disk or tape drive, a hard disk drive, other machine-readable storage or memory media such as a floppy disk, a CDROM, a CD-RW, digital versatile disk (DVD) or other optical memory, or any other type of memory, storage medium, or data storage apparatus or circuit, know. In addition, such computer readable media includes any form of communication media which embodies computer readable instructions, data structures, program modules or other data in a data signal or modulated signal, such as an electromagnetic or optical carrier wave or other transport mechanism, including any information delivery media, which may encode data or other information in a signal, wired or wirelessly, including electromagnetic, optical, acoustic, RF or infrared signals, and so on. The memory 23 may be adapted to store various look up tables, parameters, coefficients, other information and data, programs or instructions of the software of the present disclosure, and other types of tables such as database tables.

The memory 23 may in particular implement at least parts of the graph-vector-text memory GVT, the text chunk memory TCM, the vector embedding memory VEM, and the graph-based memory GBM. However, in an alternative embodiment of the present disclosure, the text chunk memory TCM, the vector embedding memory VEM and the graph-based memory GBM are implemented in a single graph-vector-text memory GVT storing the graph, text chunk and embedding vector information altogether instead of being separated modules of computer programs.

The processor 21 is programmed, using software and data structures of the disclosed computer-implemented method, for example, to perform the methodology of the present disclosure. Consequentially, the system and the computer-implemented method of the present invention may be embodied as software which provides such programming or other instructions, such as a set of instructions and/or metadata embodied within a computer readable medium, discussed above. In addition, metadata may also be utilized to define the various data structures of a look up table or a database. Such software may be in the form of source or object code, by way of example and without limitation. Source code further may be compiled into some form of instructions or object code (including assembly language instructions or configuration information). The software, source code or metadata of the present invention may be embodied as any type of code, such as C, C++, Python, SystemC, LISA, XML, Java, Brew, SQL and its variations (e.g., SQL 99 or proprietary versions of SQL), DB2, Oracle, or any other type of programming language which performs the functionality discussed herein, including various hardware definition or hardware modeling languages (e.g., Verilog, VHDL, RTL) and resulting database files (e.g., GDSII). As a consequence, a "construct", "program construct", "software construct" or "software", as used equivalently herein, means and refers to any programming language, of any kind, with any syntax or signatures, which provides or can be interpreted to provide the associated functionality or methodology specified (when instantiated or loaded into a processor or computer and executed, including the processor 21, for example).

The software, metadata, or other source code of the present invention and any resulting bit file (object code, database, or look up table) may be embodied within any tangible storage medium, such as any of the computer or other machine-readable data storage media, as computer-readable instructions, data structures, program modules or other data, such as discussed above with respect to the memory 175 , e.g., a floppy disk, a CDROM, a CD-RW, a DVD, a magnetic hard drive, an optical drive, or any other type of data storage apparatus or medium, as mentioned above.

The processor 21 may in particular run software, which controls the processor 21 to perform the functions of the natural language processing module NLP, the text embedding module TE, the chunk handling module CH, the question-answering module QAM, for example.

The network interface 25 provides the system 20 with the capability to link to external databases and servers via a communication network 27. The network interface 25 in particular enables to implement the system 20 in a spatially distributed manner by performing at least some of the individual method steps at least in part remote from the system 20.

The discussion of fig. 1 to 3 in particular present the features of the disclosure by referring to a specific embodiment of a system 20 generating a response in natural language to a query posed by the user or an agent in natural language. The discussed embodiment represents one specific application example.

Agents operating in the real world may have a digital form (virtual agents) or an embodied form (physical agents). Both virtual and physical agents require the capability to store knowledge on their environment, common-sense knowledge, as well as individual memories and beliefs. The system 20 of the present disclosure may store information that is specific for an individual agent. The information may be rooted in hardware, but also in the personal preferences of a human owner (user) of the agent.

In addition, virtual and physical agents benefit from a capability to update continuously their knowledge in an operational phase after an original training phase. Information for updating the knowledge base of the agent is often available in text or may at least be expressed in text form, often even in natural language text. Information for updating the knowledge base of the agent may include, e.g., at least some of descriptions of objects useful or at least relevant for addressing tasks and their purpose, of descriptions of humans including their characteristics and preferences, and a history of actions that occurred in the environment of the agent.

The computer-implemented method and the system 20 may be used for incrementally updating the knowledge base of the agent, whether it is a physical agent or a virtual agent. The proposed memory structure architecture and the associated management of the memory architecture support an incremental update of a pre-trained knowledge base during an operational phase of the agent.

Specific examples of such agents include, but are not limited to, digital agents, e.g., Apple's Siri, as well as agents with robotic embodiments, such as personal assistance robots

The computer-implemented method and the system 20 may support the process of automating workflows, which humans repeatedly execute with their computers, and enhance the capabilities of embodied agents that support mentally or physically impaired persons by anticipating their intentions and proactively executing helpful actions after executing a planning process for supportive actions. These intelligent agents, both virtual and physical agents, may benefit from incremental updates of their respective knowledge base. Integrating the system 20 and the computer-implemented method in an embodiment of such agents and assistance systems provides an advantageous application area of the disclosure.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps. The indefinite article "a" or "an" does not exclude a plurality.

A single element or other unit may fulfill the functions of several entities or items recited in the claims. The mere fact that different dependent claims recite certain measures and features of the control circuit does not exclude that a combination of these measures and features cannot be combined in an advantageous implementation.

### Glossary, Abbreviations, Definitions

- ChatGPT: Chatbot Generative Pre-trained Transformer
- CH: Chunk Handling
- DNN: Deep Neural Network
- EM: Embedding Model: a model, e.g., a Neural Network specifically trained for creating vector embeddings for text.
- EV: Embedding Vector
- GBM: Graph Based Memory
- GNN: Graph Neural Network
- GPT: Generative Pre-trained Transformer: type of LLM
- GVT: Graph-Vector-Text (memory)
- KG: Knowledge Graph
- LLM: Large Language Model
- LTM: Long Term Memory
- NEL: Named Entity Linking
- NER: Named Entity Recognition
- NL: Natural Language
- NLP: Natural Language Processing
- NLPRP: Natural Language Processing for Response Preparation
- NLPQP: Natural Language Processing for Query Preparation
- NN: Neural Network
- MTM: Mid-Term memory
- QA: Question Answering
- RAG: Retrieval Augmented Generation
- RGM: Response Generating Module
- STM: Short-Term Memory
- TCM: Text Chunk Memory
- TE: Text Embedding
- VE: Vector Embedding
- VEM: Vector Embedding Memory
- VS: Vector Store

## Claims

1. Computer-implemented method for generating a response by an agent to a query from a user or an agent in a system, the system comprising:
a vector embedding memory (VEM) configured to store vectors and generated chunks of natural language text, a graph-based memory (GBM) configured to store information in the form of nodes interconnected by links, and a processor (21); wherein the method comprises
retrieving matching vectors from the vector embedding memory (VEM) based on a semantic proximity of the stored vectors in the vector embedding memory (VEM) with vectors generated based on the chunks of natural language text of the obtained query;
determining and activating nodes stored in the graph-based memory (GBM) based on a correspondence with the matching vectors and connected nodes based on the links between the activated nodes; and
generating a response to the query based on chunks of text determined based on the matching vectors from the vector embedding memory (VEM), and further based on determined chunks of text that correspond to the activated nodes from the graph-based memory (GBM).

2. The computer-implemented method for generating a response to a query from a user or agent according to claim 1, the method further comprising
augmenting the generated response with references to the chunks of text that are used as a basis for generating the response for enabling full traceability.

3. The computer-implemented method for generating a response to a query from a user or agent according to claim 1 or 2, the method further comprising:
obtaining and processing, by a natural language processing module (NLP), instructions in natural language from the user to generate chunks of text;
generating, by a text embedding module (TE) vectors based on the chunks of text;
storing, by the vector embedding memory (VEM) the vectors generated by the text embedding module (TE) associated with the generated chunks of text;
searching, by the processor (21), the vector embedding memory (VEM) to determine matching vectors based on a similarity with the vector of the obtained query from the user or agent, retrieving, by a vector retrieval module (VR), the stored vectors from the vector embedding memory (VEM) based on a semantic proximity of the stored vectors in the vector embedding memory (VEM) with vectors generated by the text embedding module (TEM) based on the chunks of natural language text of the query obtained and processed by the natural language processing module (NLP) for generating a first ranked list of the determined matching vectors,
and to determine nodes stored in the graph-based memory (GBM) based on a correspondence with the determined vectors of the first ranked list of matching vectors to generate a second ranked list of corresponding nodes,
wherein the graph-based memory (GBM) stores information in the form of nodes interconnected by links, wherein each node includes a specific chunk of text representing a concept and each link is arranged between a source node and a target node of the nodes and each link represents a relationship between the concepts of the source node and the target node;
activating by the processor (21), the corresponding nodes stored in the graph-based memory (GBM) and activating connected nodes based on links between the activated nodes and the other nodes in the graph-based memory (GBM) by applying a graph traversal algorithm, in particular a random walk or a personalized page-rank;
generating, by the processor (21), a third ranked list including the activated nodes stored in the graph-based memory (GBM), selecting the activated nodes of the third ranked list for further processing, and determining the chunks of text that correspond to the activated nodes of the third ranked list; and
receiving, by the natural language processing module (NLP) the determined chunks of text that correspond to the activated nodes of the third ranked list, and generating a response to the query based on the chunks of text determined based on the semantic proximity of the stored vectors in the vector embedding memory (VEM) with the vectors generated by the text embedding module (TEM) based on the chunks of natural language text of the query, and the determined chunks of text that correspond to the activated nodes of the third ranked list for further processing.

4. The computer-implemented method for generating a response to a query from a user or agent according to claim 3 further comprises
retrieving, by the vector retrieval module (VR) the vectors from the vector embedding memory (VEM) based on the semantic proximity of the stored vectors in the vector embedding memory (VEM) in combination with a keyword-based search.

5. The computer-implemented method for generating a response to a query from a user or agent according to one of the preceding claims, wherein the method includes populating the vector embedding memory (VEM) and the graph-based memory (GBM) a priori in a training phase of the system.

6. The computer-implemented method for generating a response to a query from a user or agent according to one of the preceding claims, includes populating the vector embedding memory (VEM) and the graph-based memory (GBM) dynamically during an operation phase of the system.

7. The computer-implemented method for generating a response to a query from a user or agent according to one of the preceding claims, wherein
each node includes a chunk of natural language text representing an abstracted concept.

8. The computer-implemented method for generating a response to a query from a user or agent according to one of the preceding claims, wherein
each concept is represented by a node stored in the graph-based memory (GBM) and the corresponding chunk of text, and the corresponding vector stored in the vector embedding memory (VEM).

9. The computer-implemented method for generating a response to a query from a user or agent according to one of the preceding claims, wherein the method includes,
maintaining, by the processor (21), continuously a correspondence between a vector stored in vector embedding memory (VEM) and the corresponding node stored in the graph-based memory (GBM).

10. The computer-implemented method for generating a response to a query from a user or agent according to one of the preceding claims, wherein
the nodes stored in the graph-based memory (GBM) correspond to concepts that are a superset of the concepts corresponding to the vectors stored in the vector embedding memory (VEM), and
the graph-based memory (GBM) is configured to store additional information about a set of concepts in form of relations between the concepts of the set of concepts and additional concepts without corresponding vectors in the vector embedding memory (VEM).

11. The computer-implemented method for generating a response to a query from a user or agent according to one of the preceding claims, wherein
the graph-based memory (GBM) is configured to further store additional information about additional concepts exceeding the concepts corresponding to the vectors stored in the vector embedding memory (VEM).

12. The computer-implemented method for generating a response to a query from a user or agent according to one of the preceding claims, wherein the method includes
analyzing, by the natural language processing module (NLP) questions, queries or instructions obtained from the user or the agent, and, based on the analysis, to determine whether there is an intent of the user to access memory content of the knowledge base, and to store new memory content in the knowledge base, and the text embedding module (TE) is further configured to convert a generated chunk of text that describes the new memory content into a vector that describes the new memory content.

13. The computer-implemented method for generating a response to a query from a user or agent according to one of the preceding claims, wherein the method includes
analyzing, by the natural language processing module (NLP) questions, queries or instructions obtained from the user or agent, and,
in the step of activating by the processor (21), activating the corresponding nodes based on the analysis stored in the graph-based memory (GBM) and activating connected nodes based on the links between the activated nodes and the other nodes in the graph-based memory (GBM), in particular restricting activating the connected nodes to a selected subset of link types and node types based on the analysis.

14. The computer-implemented method for generating a response to a query from a user or agent according to one of the preceding claims, wherein the method comprises
generating, by the processor (21), the first ranked list of matching vectors for responding to the obtained query from the user or agent from the vectors stored in the vector embedding memory (VEM) including for each matching vector a measure of a degree of match or a measure for suitability or a similarity assessment.

15. The computer-implemented method for generating a response to a query from a user or agent according to one of the preceding claims, wherein
the vector embedding memory (VEM) is configured to store content of at least one further modality, and
the method comprises generating the response to the query further based on the stored content of at least one further modality based on the retrieved matching vectors from the vector embedding memory (VEM).

16. The computer-implemented method for generating a response to a query from a user or agent according to one of the preceding claims, wherein the method comprises
building dynamically, by a perception module (), a knowledge database stored in the vector embedding memory (VEM) and the graph-based memory (GBM), wherein the knowledge database comprises a plurality of chunks of text the stored in the vector embedding memory (VEM) and a plurality of nodes and links stored in the graph-based memory (GBM).

17. The computer-implemented method for generating a response to a query from a user or agent according to one of the preceding claims, wherein the method comprises
performing, by the processor (21) is configured perform a synchronization process including at least one of comparing representations stored in the vector embedding memory (VEM) with corresponding representations stored in the graph-based memory (GBM) and deriving representations stored in the vector embedding memory (VEM) and corresponding representations stored in the graph-based memory (GBM) from one predetermined data source.

18. The computer-implemented method for generating a response to a query from a user or agent according to one of the preceding claims, wherein the method comprises,
determining, by the processor (21), a type of the query based on an analysis of the chunk of text, and
activating, by the processor (21), the nodes stored in the graph-based memory (GBM) further based on the determined type of query,
in particular, activating, by the processor (21) selected link types or node categories stored in the graph-based memory (GBM) further based on the determined type of query.

19. The computer-implemented method for generating a response to a query from a user or agent according to one of the preceding claims, wherein the method comprises
adjusting dynamically, by the processor (21), a number of retrieved chunks of text when activating the corresponding nodes stored in the graph-based memory (GBM),
in particular, dynamically adjusting the number of retrieved chunks of text from the representation stored in the graph-based memory (GBM) to avoid reaching a token limit, or
determining, by the processor (21), whether information retrieved from the graph-based memory (GBM) and the vector embedding memory (VEM) is sufficient for responding to the query, and
dynamically adjusting, by the processor (21),the number of retrieved chunks of text from the graph-based memory (GBM) in case of determining that the information retrieved from the graph-based memory (GBM) and the vector embedding memory (VEM) is insufficient for responding to the query.

20. The computer-implemented method for generating a response to a query from a user or agent according to one of the preceding claims, wherein
determining, by the processor (21), a size of the retrieved chunks of text from the representation stored in the graph-based memory (GBM) and the vector embedding memory (VEM), and in case the determined size exceeds a predetermined threshold, applying a process of summarizing based on a large language model, in particular based on a MapReduce algorithm, the retrieved chunks of text.

21. The computer-implemented method for generating a response to a query from a user or agent according to one of the preceding claims, wherein
the processor (21) is configured to determine a measure representing a mapping of the chunks of text to the representation stored in the graph-based memory (GBM), and to adapt the process of generating the chunks of text and determining the mapping measure until the determined mapping measure meets a predetermined termination criterion.

22. A system for generating a response to a query from a user or agent comprising
a vector embedding memory (VEM) configured to store vectors and generated chunks of natural language text;
a graph-based memory (GBM) configured to store information in the form of nodes interconnected by links; and
a processor (21) configured to
retrieve matching vectors from the vector embedding memory (VEM) based on a semantic proximity of the stored vectors in the vector embedding memory (VEM) with vectors generated based on the chunks of natural language text of the obtained query,
to determine and activate nodes stored in the graph-based memory (GBM) based on a correspondence with the matching vectors and connected nodes based on the links between the activated nodes, and to
generate a response to the query based on chunks of text determined based on the matching vectors from the vector embedding memory (VEM), and further based on determined chunks of text that correspond to the activated nodes from of the graph-based memory (GBM).

23. A system including an agent and the system for generating a response to a query from the agent according to claim 22, wherein the agent is an autonomous agent.

24. The system according to claim 23, wherein the autonomous agent is configured to generate and output a large language model based query and to perform behavior planning for the autonomous agent based on the response received from the system in particular about preferences of relevant stakeholders and cause effect chains for possible actions, for generating a response to the query of the autonomous agent.
